# EUROPÄISCHE PATENTANMELDUNG

(11) **EP 2 124 178 A1**
(43) Veröffentlichungstag der Anmeldung: **25.11.2009**
(21) Anmeldenummer: 09450101.2
(22) Anmeldetag: 19.05.2009
(51) Int. Cl.: G06Q 20/00, G07F 19/00

(54) **Vorrichtung und Verfahren zum Erzeugen und System zum Verwalten eines Guthabens**

(30) Priorität: 19.05.2008 AT 7962008
(71) Anmelder: Arland Gesellschaft für Informatinstechnologie mbh, 8020 GRAZ (AT)
(72) Erfinder: Weber, Hartmut, 8051 Graz (AT)
(74) Vertreter: Margotti, Herwig Franz

(57) **Zusammenfassung**

Bei einem Verfahren zum Erzeugen eines Guthabens, welches Guthaben Geld in digitaler Form repräsentiert, wird bei einer Vorrichtung zum Erzeugen eines Guthabens ein Zahlungsmittel empfangen, mit dessen Hilfe das Guthaben erzeugt wird, und das Guthaben von der Vorrichtung an einen Guthabenverwaltungsserver übertragen, bei dem das Guthaben mit Hilfe eines eindeutig identifizierbaren Kontos gespeichert wird.

## Beschreibung

Die Erfindung betrifft ein Verfahren zum Erzeugen eines Guthabens.

Die Erfindung betrifft eine Vorrichtung zum Erzeugen eines Guthabens.

Die Erfindung betrifft ein System zum Verwalten eines Guthabens.

Ein Verfahren bzw. eine Vorrichtung zum Erzeugen eines Guthabens sind im Zusammenhang mit Spielautomaten bekannt. Mit Hilfe einer solchen Vorrichtung kann von einem Benutzer Geld in Form von Banknoten oder Münzen in den Spielautomaten eingeführt bzw. eingeworfen werden. Ein dadurch entstehendes Guthaben, das im Spielautomaten registriert wird, steht sodann dem Benutzer zur Verfügung und kann beispielsweise als Wetteinsatz bei Wettspielen, die mit Hilfe des Spielautomaten angeboten werden, verwendet werden. Am Ende des Spielverlaufs kann der Benutzer das Guthaben in Geld konvertieren, welches von dem Spielautomaten ausgezahlt wird.

Weiters ist ein System zum Verwalten eines Guthabens im Zusammenhang mit sogenannten E-Commerce-Systemen bekannt. Solche Systeme erlauben es einem registrierten Benutzer beispielsweise über das Internet Einkäufe zu tätigen und dabei über Guthaben auf einem Konto des Benutzers zu verfügen. Dabei ist es üblich, dass das Konto von einer Bank zur Verfügung gestellt wird. Der Benutzer oder ein Dritter muss zunächst das Konto durch Einzahlen von Geld am Bankschalter oder durch Überweisen eines Geldbetrages von einem anderen Konto auf das Konto des Benutzers mit einem Guthaben aufladen. Im Verlauf einer E-Commerce-Transaktion kann nun auf bargeldlose Weise durch einen Einziehungsauftrag oder einen Abbuchungsauftrag auf das in dem Konto vorhandene Guthaben zugegriffen werden. Weiters ist bekannt, dass Kreditkartenkonten bei E-Commerce-Transaktionen zum Einsatz kommen. Solche Kreditkartenkonten werden von Kreditkarteninstituten bereitgestellt. Sie setzen jedoch die Existenz eines Kontos des Benutzers bei einer Bank voraus. Bei einer kreditkartenbasierten E-Commerce-Transaktion wird nun zunächst das Kreditkartenkonto belastet und zeitverzögert auf das Guthaben auf dem Konto des Benutzers bei seiner Bank zugegriffen.

Bei der bekannten Vorrichtung zum Erzeugen eines Guthabens bzw. einem solchen Verfahren besteht das Problem, dass das eingezahlte Geld bzw. das damit assoziierte Guthaben nur lokal bei dem jeweiligen Gerät, an das die Vorrichtung angeschlossen bzw. in das die Vorrichtung eingebaut ist, zur Verfügung steht.

Weiters besteht bei dem bekannten System das Problem, dass immer ein Bankkonto involviert sein muss und Einzahlungen von Geld, das nachfolgend in Form eines digital gespeicherten Guthabens für Transaktionen zur Verfügung steht, immer an die Präsenz eines Bankkontos und eines Bankschalters gebunden ist.

Ein weiteres bekanntes System der Firma "d.paysafecard.com GmbH" mit Sitz in Fritz-Vomfelde-Straße 34, D-40547 Düsseldorf, basiert auf vorausbezahlten Wertkarten, die bei einer Verkaufsstelle oder bei einem Automaten erworben werden können und anschließend für Einkäufe im Internet benützt werden können. Auf der Wertkarte befindet sich ein Code, der bei Einkäufen, wie beispielsweise in einem Webshop verwendet werden muss. Die Wertkarten sind in Form von Kunststoffkarten oder in Form von Automatenausdrucken erhältlich. Als nachteilig hat sich erwiesen, dass ihr Wert in Einheiten von EUR 10.-, EUR 25.-, EUR 50 oder EUR 100.- vordefiniert ist. Um Einkäufe mit größeren Beträgen zu tätigen, müssen mehrere Wertkarten kombiniert werden und eine Ablöse in Geld ist nicht vorgesehen.

Ein weiters bekanntes System der Firma "Moneybookers Ltd" mit Sitz in Welken House, 10-11 Charterhouse Square, London, EC1M 6EH, basiert auf einem virtuellen Konto, das jedoch nur über ein bestehendes Bankkonto be- und entladen werden bzw. mit Hilfe eines Schecks entladen werden kann. Das angebotene Service versteht sich als eine einfache, schnelle und kostengünstige Verbesserung im täglichen Zahlungsverkehr, wobei Geld per E-Mail von einer Kreditkarte oder einem Bankkonto versendet bzw. empfangen werden kann und zum online-mäßigen Einkaufen verwendet werden kann.

Die Erfindung hat sich zur Aufgabe gestellt, ein eingangs erwähntes Verfahren bzw. eine eingangs erwähnte Vorrichtung zum Erzeugen eines Guthabens, sowie ein eingangs erwähntes System zum Verwalten eines Guthabens zu verbessern.

Diese Aufgabe wird durch ein Verfahren zum Erzeugen eines Guthabens mit den folgenden Merkmalen gelöst:

Verfahren zum Erzeugen eines Guthabens, welches Guthaben Geld in digitaler Form repräsentiert, wobei bei einer Vorrichtung zum Erzeugen eines Guthabens ein Zahlungsmittel empfangen wird, mit dessen Hilfe das Guthaben erzeugt wird, und das Guthaben von der Vorrichtung an einen Guthabenverwaltungsserver übertragen wird, bei dem das Guthaben mit Hilfe eines eindeutig identifizierbaren Kontos gespeichert wird.

Eine erfindungsgemäße Vorrichtung zum Erzeugen eines Guthabens, das Geld in digitaler Form repräsentiert, umfasst Empfangsmittel, die zum Empfangen von Zahlungsmitteln und zum Erzeugen des Guthabens mit Hilfe der Zahlungsmittel ausgebildet sind, und Übertragungsmittel, die zum Übertragen des Guthabens an einen Guthabenverwaltungsserver ausgebildet sind, bei dem das Guthaben mit Hilfe eines eindeutig identifizierbaren Kontos speicherbar ist.

Erfindungsgemäß wird die vorstehend definierte Aufgabe bei einem System zum Verwalten eines Guthabens dadurch gelöst, dass die folgenden Merkmale vorgesehen sind:

System zum Verwalten eines Guthabens, welches Guthaben Geld in digitaler Form repräsentiert, wobei das System zumindest eine Vorrichtung zum Erzeugen eines Guthabens aufweist und einen Guthabenverwaltungsserver zum Verwalten eines Guthabens aufweist, wobei der Guthabenverwaltungsserver Kommunikationsmittel zum Kommunizieren mit der Vorrichtung aufweist und Verwaltungsmittel aufweist, die dazu ausgebildet sind, als Folge einer Kommunikation mit der Vorrichtung ein eindeutig identifizierbares Konto zu erzeugen, mit dessen Hilfe das von der Vorrichtung her empfangbare Guthaben speicherbar ist.

Durch das Vorsehen der erfindungsgemäßen Merkmale sind die Vorteile erhalten, dass das Einzahlen von Geld auf ein Konto an jedem beliebigen Ort stattfinden kann, an dem eine erfindungsgemäße Vorrichtung installiert ist. Ein weiterer Vorteil ist durch das Zusammenwirken der erfindungsgemäßen Vorrichtung mit dem Guthabenverwaltungsserver erhalten, weil dadurch ein von der Infrastruktur einer Bank unabhängiges Konto bedienbar ist, dass grundsätzlich in jeder beliebigen Server-Client-Umgebung verwendet werden kann. Dadurch wird weiters einem lange bestehenden Wunsch vieler Benutzer - zum Beispiel von Spielautomaten oder E-Commerce Bezahlungen - Rechnung getragen, ein bargeldloses Konto zur Verfügung zu haben, bei dem bereits zum Zeitpunkt des Kreierens keine der üblichen Problematiken von Bankkonten oder Kreditkartenkonten, wie beispielsweise die Nachvollziehbarkeit durch Bankkontenbuchungen oder Kreditkartenabrechnungen vorliegt.

Bei einer erfindungsgemäßen Lösung kann beispielsweise vorgesehen sein, dass eine Kontokennung völlig autonom von dem Guthabenverwaltungsserver kreiert wird. Es hat sich jedoch als besonders vorteilhaft erwiesen, wenn die Maßnahmen gemäß dem Anspruch 2 bzw. gemäß dem Anspruch 7 vorgesehen sind. Dadurch ist der Vorteil erhalten, dass Identifikationsdaten zur Anwendung kommen, die dem Benutzer der Vorrichtung bzw. des Verfahrens bereits bekannt sind oder deren Verfügbarkeit zumindest in seiner Gewalt liegt. Solche Identifikationsdaten können beispielsweise von einem Benutzer manuell in ein

Terminal eingegeben werden oder, wie dies im Zusammenhang mit sogenannten Radio-Frequency-Identification-Devices (RFID) oder Near-Field-Communication (NFC) Devices bekannt ist, durch die eindeutige Identifikationsnummer solcher Geräte über kontaktlose Schnittstellen bereitgestellt werden.

Ein weiterer Aspekt der Erfindung betrifft das Vorsehen der Maßnahmen gemäß dem Anspruch 3 bzw. dem Anspruch 8. Dadurch ist der Vorteil erhalten, dass der Benutzer auf zuverlässige und anonyme Weise über das erfolgreiche Anlegen des Kontos und den Transfer des erzeugten Guthabens auf dieses Konto informiert wird.

Ein weiterer Aspekt der Erfindung betrifft das Vorsehen der Maßnahmen gemäß dem Anspruch 11. Dadurch ist der Vorteil erhalten, dass ein autonomes selbstbedienungsbasiertes Zugänglichmachen von Internetverbindungen ermöglicht wird. Dabei kann ein Benutzer bares Geld in ein Guthaben konvertieren und über ein und das selbe Gerät unter Verwendung des erzeugten Guthabens den Zugang von einem lokalen Netzwerk in das Internet erhalten. Dies ist mit einer sogenannten Proxy-Funktionalität realisiert, die eine indirekte Netzverbindung von einem Netz, wie beispielsweise einem lokalen Netzwerk, in ein anderes Netzwerk, wie beispielsweise das Internet erlaubt. Das erzeugte Guthaben kann in diesem Szenario in mehrfacher Hinsicht verwendet werden, wie beispielsweise als Zeitguthaben oder als Zahlungsmittel im Internet.

Ein weiterer Aspekt der Erfindung betrifft das Vorsehen der Maßnahmen gemäß dem Anspruch 4 und 5 bzw. dem Anspruch 9 und 10 bzw. dem Anspruch 13. Dadurch wird dem Benutzer das Konto bzw. das mit Hilfe des Kontos gespeicherte Guthaben für weitere Transaktionen zugänglich gemacht, und zwar ohne dass Buchungen mit Hilfe von Kreditkarten oder mit Hilfe von Bankkonten nötig wären. Vielmehr erlaubt die auf verschiedenste Art dem Benutzer zugänglich gemachte Beleginformation eine unmittelbare Benutzung des Kontos, wobei keine der sonst üblichen Zahlungsmittel zur Verwendung kommen. Die Verwendung der Beleginformation muss lediglich bei diversen Veränderungseinrichtungen, wie beispielsweise einem Spielautomaten, einem Wettautomaten, usw. oder bei internetbasierten E-Commerce-Systemen, die mit dem Guthabenverwaltungsserver zusammen arbeiten, unterstützt werden.

Die vorstehend angeführten Aspekte und weitere Aspekte der Erfindung werden nachfolgend mit Hilfe von exemplarischen Ausführungsbeispielen erörtert.

Die Erfindung wird mit Hilfe der nachfolgend angeführten exemplarischen Ausführungsbeispielen detailliert erörtert, wobei die Erfindung jedoch nicht auf diese exemplarischen Ausführungsbeispiele beschränkt ist.
Fig. 1 zeigt auf schematische Weise in Form eines Blockschaltbildes ein System gemäß einem Ausführungsbeispiel der Erfindung.
Fig. 2 zeigt auf schematische Weise eine Vorrichtung gemäß einem Ausführungsbeispiel der Erfindung.

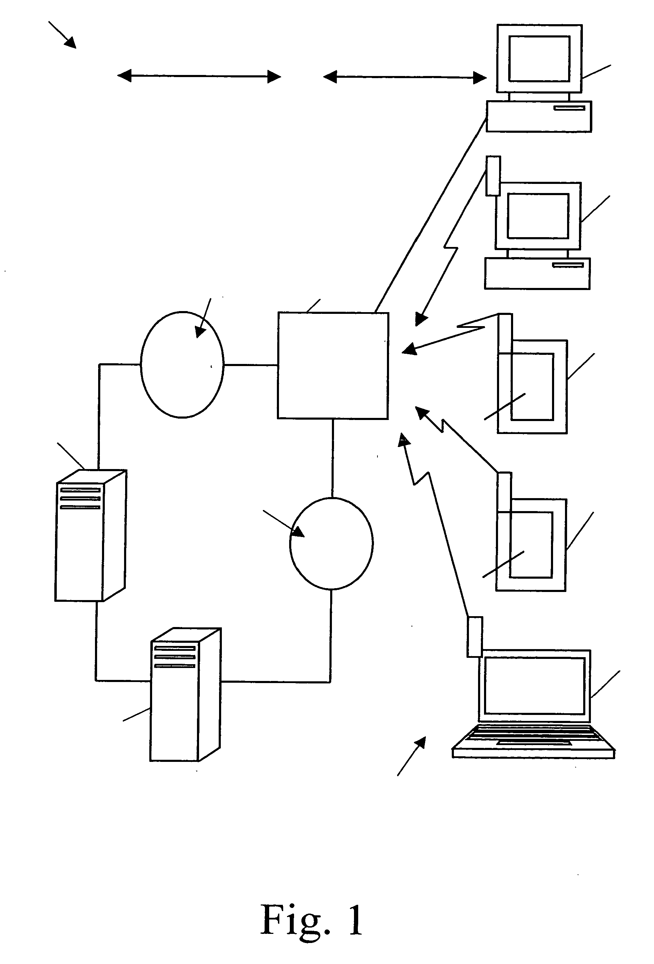

Fig. 1 zeigt auf schematische Weise ein Blockschaltbild eines Systems 1 zum Verwalten eines Guthabens, welches Geld in digitaler Form repräsentiert. Das System 1 weist eine Vorrichtung 2 zum Erzeugen des Guthabens und einen Guthabenverwaltungsserver 3 auf, der zum Verwalten des Guthabens mit Hilfe eines Kontos ausgebildet ist. Weiters sind in der Figur 1 Veränderungseinrichtungen 4 dargestellt, die im vorliegend Fall durch einen E-Commerce-Server 10 bzw. durch zwei PCs 11 und 12, zwei PDAs 13 und 14 und einen Laptop 15, summarisch kurz Endgeräte genannt, gebildet sind. Die Veränderungseinrichtungen 4 dienen zum Verändern des Guthabens.

Die Vorrichtung 2, der Guthabenverwaltungsserver 3, und der E-Commerce-Server 10 sind miteinander über das Internet 16 verbunden. Es kann jedoch auch zwischen dem Guthabenverwaltungsserver 3 und dem E-Commerce-Server 10 eine direkte Verbindung bestehen, wie das in Fig. 1 dargestellt ist. Die Vorrichtung 2 kann weiters auch über ein Mobilfunknetzwerk 17, wie beispielweise GSM oder UMTS oder andere geeignete Verfahren, mit dem Guthabenserver 3 verbunden sein. Diese Verbindungen definieren ein Wide Area Network (WAN), über das die Vorrichtung 2 kommunizieren kann. Diese Verbindung wird vorwiegend zum Kommunizieren mit extern zu einer Verkaufsstelle gelegenen Geräten verwendet, wie beispielsweise dem zentral gewarteten Guthabenverwaltungsserver 3 des Betreibers einer Kette von Spiellokalen oder dem E-Commerce-Server 10.

Die Vorrichtung 2 ist weiters mit dem PC 11 über ein kabelgebundenes Netzwerk, mit dem PC 12 sowie mit den PDAs 13 und 14 und dem Laptop 15 über ein drahtloses Netzwerk verbunden, wie beispielsweise W-LAN, Bluetooth, ZigBee, etc. Diese Verbindungen definieren ein Local Area Network (POS-LAN) über das die Vorrichtung 2 kommunizieren kann. Diese Verbindung wird vorwiegend zum Kommunizieren mit den innerhalb einer Verkaufsstelle gelegenen Endgeräten 11 bis 15 verwendet, über welche Spiele oder Wetten oder sonstige Produkte, Waren oder Dienstleistungen gegen eine Veränderung des Guthabens verkauft oder genutzt werden können.

Auf die Veränderungseinrichtungen 4 ist nachfolgend nicht weiter eingegangen, weil diese in ihrer wesentlichen Funktionalität bekannt sind und das Zusammenwirken mit der Vorrichtung 2 für den Fachmann bekannte Maßnahmen erfordert, wie beispielsweise ein Webinterface und damit einhergehende Sicherheitsmaßnahmen.

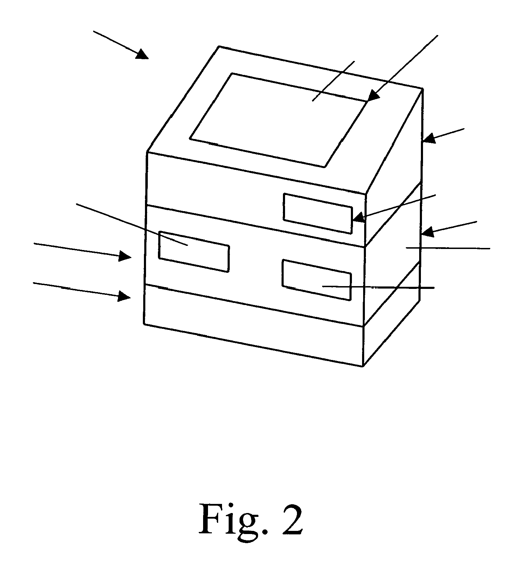

In der Figur 2 ist die Vorrichtung 2 und ihre modulare Struktur schematisch dargestellt.

Die Vorrichtung 2 weist Empfangsmittel 5 auf, die zum Empfangen von Zahlungsmitteln und zum Erzeugen des Guthabens lokal oder am Guthabensverwaltungsserver 3 mit Hilfe der Zahlungsmittel ausgebildet sind. Im vorliegenden Fall sind ein Münzprüfer 6 und ein Notenleser 7 zu sehen. Es sei jedoch erwähnt, dass ebenso eine RFID basierte Schreib-Leseeinrichtung oder eine chipkartenbasierte Schreib-Leseeinrichtung vorgesehen sein kann, sodass nicht nur Münzen oder Banknoten als Zahlungsmittel verwendet werden können, sondern auch kontaktlose oder kontaktbehaftete Karten als Zahlungsmittel einsetzbar sind. Gleiches gilt für magnetstreifenbasierte Zahlungsmittel, wie beispielsweise Kreditkarten. In allen Fällen wird eine digitale Repräsentation von Geld, nämlich das Guthaben erzeugt.

Zu diesem Zweck weist die Vorrichtung 2 weiters Übertragungsmittel 8 auf. Die Überragungsmittel 8 sind mit Hilfe eines Computers realisiert, der über entsprechende Software und kryptographische Hardware verfügt und eine gesicherte Verbindung zwischen der Vorrichtung 2 und dem Guthabenverwaltungsserver 3 ermöglicht. Aus praktischen und sicherheitstechnischen Gründen sind die Empfangsmittel 5 und die Übertragungsmittel 8 in einem Modul bzw. Element, nämlich dem sogenannten "PAYELEMENT" 18 gekapselt.

Die Empfangsmittel 5 sind weiters zum Empfangen von Identifikationsdaten ausgebildet. Solche Identifikationsdaten können beispielsweise durch die eindeutige Identifikationsnummer einer der vorangehend erwähnten kontaktlosen oder kontaktbehafteten Karte gegeben sein, die bei der Kommunikation zwischen der Schreib-Leseeinrichtung und der Karte verfügbar ist. Diese Identifikationsdaten werden mit Hilfe der Übertragungsmittel 8 zusammen mit dem Guthaben an den Guthabenverwaltungsserver 3 übertragen und dort zum Generieren einer eindeutigen Kontokennung verwendet, so dass beispielsweise bei den diversen Veränderungseinrichtungen 4 lediglich die zum Erzeugen des Kontos verwendete Karte benützt werden muss, um den Zugriff auf das Konto zu autorisieren.

Die Übertragungsmittel 8 sind weiters zum Empfangen einer Beleginformation von dem Guthabenverwaltungsserver 3 her ausgebildet, welche Beleginformation ein erfolgreiches Speichern des Guthabens mit Hilfe des Kontos belegt.

Um die Beleginformation dem Benutzer der Vorrichtung 2 zugänglich zu machen, weist die Vorrichtung 2 Bereitstellungsmittel 9 auf, die zum Bereitstellen der Beleginformation ausgebildet sind. Diese können beispielsweise durch einen Bildschirm realisiert sein, von dem der Benutzer die Beleginformation ablesen kann. Als besonders vorteilhaft hat es sich erwiesen, wenn jedoch ein "DRUCKELEMENT" 19 vorgesehen ist, mit dessen Hilfe ein mehrdimensionaler Strichcode auf einem Ticket ausdruckbar ist. Dadurch ist die Anonymität des Benutzers vollständig gewährleistet und die Benutzung des Tickets bei den verschiedenen Veränderungseinrichtungen 4 an kein den Benutzer identifizierendes persönliches Element gekoppelt. Es sei an dieser Stelle jedoch erwähnt, dass auch die Kontokennung in Form von Klartext oder ein Zugriffscode in Form von Benutzername und / oder Passwort oder ein eindimensionaler Strichcode auf einem Ticket ausgedruckt werden kann.

Um die Benutzung der Vorrichtung 2 an die jeweiligen Bedingungen anzupassen oder um die Interaktion des Benutzers mit der Vorrichtung 2 zu verbessern kann auch ein eigenes sogenanntes "BEDIENELEMENT" 20 vorgesehen sein, das beispielsweise über einen Bildschirm oder eine einfache LCD-Anzeige oder einen Touchscreen und / oder ein Tastenfeld verfügt.

Um die Anbindung der Vorrichtung an die in Fig. 1 dargestellte Umgebung zu realisieren, weist die Vorrichtung weiters ein sogenanntes "PROXYELEMENT" 21 auf, das im Wesentlichen auf bekannte Weise einen Computer beinhaltet, der mit einer Proxysoftware und mit einer Webserversoftware ausgerüstet ist, sodass Kommunikation über das Internet 16 ermöglicht ist. Weiters sind Mobilfunkmittel integriert, die eine Kommunikation über das UMTS / GSM Mobilfunknetz 17 erlauben. Weiters ist ein W-LAN-fähiger Router zum Unterstützen von drahtlosen Veränderungseinrichtungen 4 und ein integrierter Switch für die Anbindung von drahtgebundenen Veränderungseinrichtungen 4 vorgesehen.

Die einzelnen Elemente der Vorrichtung sind je nach Gegebenheit modular miteinander kombinierbar, was beispielsweise durch voneinander getrennte elektrische und mechanische Verbindungen oder durch kombinierte elektromechanische Steckverbindungen mit Verriegelungsmechanismen oder zusätzlichen Schlössern ermöglicht wird, was jedoch nicht im Detail in der Fig. 2 dargestellt ist.

Der in der Figur 1 dargestellte Guthabenverwaltungsserver 3 ist zum Verwalten eines durch die Vorrichtung 2 übermittelten Guthabens ausgebildet und weist zumindest - in der Figur 1 nicht explizit dargestellte - Kommunikationsmittel auf, die zum Kommunizieren mit der Vorrichtung 2 über die von der Vorrichtung 2 unterstützten und dort bereits erwähnten Kommunikationsmedien bzw. -kanäle oder Kommunikationsprotokolle ausgebildet sind.

Weiters sind Verwaltungsmittel vorgesehen, die zum Erzeugen und zum Verwalten eines eindeutig identifizierbaren Kontos ausgebildet sind, mit dessen Hilfe das von der Vorrichtung 2 her empfangene Guthaben gespeichert wird. Dabei kommen im Wesentlichen Datenbankapplikationen zum Einsatz, welche die geforderten Funktionalitäten und Sicherheitsmerkmale gewährleisten. Die bei dem Guthabenverwaltungsserver 3 unterstützten Datenmodelle bzw. Datenstrukturen erlauben das Verwalten eines Einzelkontos oder mehrerer gruppierter Konten sowie das Protokollieren von einzelnen Transaktionen. Weiters ermöglicht der Guthabenverwaltungsserver 3 durch Kommunikation mit der Vorrichtung 2 und Nutzung z.B. des Bildschirms und der Tastatur, dass die gruppierten Konten angezeigt werden und gegebenenfalls Transaktionen zwischen den Konten durchgeführt werden können. Auch verschiedene Währungen werden unterstützt. Ein weiteres Feature erlaubt dieselbe Funktionalität über ein passwortgesichertes Webinterface ohne die Verwendung der Vorrichtung 2. Der Guthabenverwaltungsserver 3 unterstützt auch die Einbindung eines oder mehrerer E-Commerce-Server 10. Zu diesem Zweck sind Interfaces vorgesehen, die auch von dem jeweiligen E-Commerce-Server 10 unterstützt werden müssen.

Nachfolgend wird die Funktionsweise der Vorrichtung zum Erzeugen eines Guthabens und die Funktion des Systems zum Verwalten des Guthabens mit Hilfe von Beispielen beschrieben, auf welche die Erfindung jedoch nicht beschränkt ist.

Gemäß einem Beispiel sei angenommen, dass sich ein Benutzer - auch Endkunde genannt - in einem Verkaufslokal, wie beispielsweise einem Wettbüro, befindet - das auch allgemein als Point Of Sale (POS) bezeichnet wird - und dort ein Konto eröffnen möchte, um dieses in diesem Wettbüro oder in einem Wettbüro, das zu einer Wettbürokette gehört, zu verwenden. Der Benutzer verwendet dafür die Vorrichtung 2 - die vom Anmelder als "PAYCUBE" bezeichnet wird - und führt ihr Zahlungsmittel zu, die im vorliegenden Fall in Form von Geldmünzen in den Münzprüfer und Geldscheinen in den Notenleser der Vorrichtung eingeführt werden. Die Zahlungsmittel werden somit von der Vorrichtung 2 empfangen und das PAYELEMENT 16 ermittelt den Wert des eingeführten Geldes und erzeugt eine digitale Repräsentation, welche das Guthaben bildet, das in dem Konto gespeichert werden soll.

Während der Benutzer das Geld einführt wird ihm laufend der aktuelle Wert des eingeführten Geldes über das Display mitgeteilt.

Sobald ein Zielwert erreicht ist, betätigt der Benutzer den Touchscreen des BEDIENELEMENTs 20, um den Buchungsvorgang zu aktivieren. Daraufhin wird zwischen der Vorrichtung 2 und dem Guthabenverwaltungsserver 3 - der vom Anmelder als "APAY Server" bezeichnet wird - eine verschlüsselte Verbindung aufgebaut, und die Vorrichtung 2 authentifiziert sich bei dem Guthabenverwaltungsserver 3. Die Vorrichtung 2 verwendet dazu ihre Übertragungsmittel 8, die mit den Kommunikationsmitteln des Guthabenverwaltungsservers 3 kooperieren, und sendet nach erfolgter Authentifizierung das Guthaben gegliedert in Betrag und Währung an den Guthabenverwaltungsserver 3. Bei dem Guthabenveraltungsserver 3 wird daraufhin ein Konto angelegt und eine Kontokennung generiert, die das eindeutige Identifizieren des Kontos erlaubt. Das übertragene Guthaben wird mit Hilfe des Kontos gespeichert und die Kontokennung wird verschlüsselt und in der Datenbank des Guthabenverwaltungsservers 3 gespeichert. Die Kontokennung wird weiters an die Vorrichtung 2 kommuniziert und dort mit Hilfe des DRUCKELEMENTS als Bestandteil der mit Hilfe eines dreidimensionalen Strichcodes codierten Beleginformation auf Papier (als Ticket) ausgedruckt. Weitere Bestandteile der Beleginformation sind im vorliegenden Fall eine Prüfsumme und eine Nummer, die den POS identifiziert, bei dem die Transaktion stattgefunden hat. Der Zugriff auf das Konto ist ab diesem Zeitpunkt nur dem Inhaber des Tickets möglich.

Es sei an dieser Stelle erwähnt, dass im Verlauf des Buchungsvorgangs auch noch weitere Sicherheitsinformationen, wie beispielsweise ein Benutzername und / oder ein Passwort abgefragt werden können. Diese zusätzlichen Sicherheitsinformationen können bei der Erstellung der Kontokennung mit verwendet werden und beispielsweise auch verschlüsselt als Bestandteil der Beleginformation aufscheinen, um die Benutzung des Tickets durch einen unbefugten Dritten zu verhindern.

Der Benutzer hat nun die Möglichkeit, bei z.B. dem Endgerät 11 das Ticket einem Strichcodeleser zugänglich zu machen und mit Hilfe der in dem Strichcode codierten Beleginformation auf das Konto zuzugreifen oder die Beleginformationen über Tastatur oder Touchscreen einzugeben und einen Teil oder das gesamte Guthaben als Wettguthaben für Wetteinsätze, die über das Endgerät 11 getätigt werden können, zu verwenden. Sobald der Benutzer das Wetten beendet, verwendet er wieder das bestehende Ticket zur Authentifikation oder generiert sich ein neues und kann das zu diesem Zeitpunkt vorliegende Wettguthaben auf sein Konto auf dem Guthabenverwaltungsserver 3 transferieren.

Ähnlich verhält es sich, wenn der Benutzer zum Erzeugen des Kontos eine kontaktlos oder kontaktbehaftet funktionierende Chipkarte verwendet. In diesem Fall wird bei einer Kommunikation zwischen einer z.B. RFID Schreib-Leseeinrichtung, die in die Vorrichtung 2 integriert ist, die von der Chipkarte gesendete eindeutige Kartennummer empfangen und zusammen mit dem nach Betrag und Währung gegliederten Guthaben an den Guthabenverwaltungsserver 3 übertragen. Bei dem Guthabenverwaltungsserver 3 wird sodann ein Konto kreiert und mit Hilfe der Kartennummer eine Kontokennung erzeugt und in der Datenbank verschlüsselt gespeichert. Somit ist der Zugriff auf das Konto an die Benutzung der Chipkarte gebunden. Dem Benutzer wird der erfolgreiche Buchungsvorgang am Bildschirm der Vorrichtung 2 mitgeteilt und er kann von nun an seine Chipkarte verwenden, um das Guthaben bei einem der Endgeräte 11 bis 15 zu verwenden. Es sei in diesem Zusammenhang erwähnt, dass auch in diesem Fall ein Ausdrucken eines Tickets erfolgen kann und dass bei der Verwendung des Tickets die Chipkarte als Träger der zusätzlichen Sicherheitsinformation eingesetzt werden kann.

Die Erfindung ist auf analoge Weise auch im Bereich der E-Commerce-Transaktionen anwendbar, wobei die jeweiligen E-Commerce-Server 10 über eine entsprechende Anbindung an die Vorrichtung 2 und an den Guthabenverwaltungsserver 3 verzügen müssen und auch die Verwendung der Beleginformation über geeignete Benutzerschnittstellen unterstützen müssen.

Ein lebendiges Beispiel für eine Anwendung der Erfindung ist durch ein Kaffeehaus gegeben, bei dem in einer lokalen Netzkonfiguration (POS LAN) die Vorrichtung 2 als zentrales Element eingesetzt wird. Die Vorrichtung 2 weist gemäß diesem Beispiel eine Proxy-Funktionalität auf, über welche die in dem Kaffeehaus vorhandenen Internetsurfstationen das Internet erreichen. In der Vorrichtung 2 ist ein Webserver integriert, der bei den Surfstationen eine Startseite anzeigt. Mit Hilfe der Vorrichtung 2 kann der Benutzer selbstständig bares Geld in ein Guthaben wandeln und zum Beispiel zum Surfen im Internet verwenden und sich danach über die angezeigte Startseite durch Benutzung des Guthabens in das Internet einloggen. Das Verwenden dieses Guthabens wurde bereits in den vorangehenden Absätzen ausführlich behandelt.

Weiters ist das Berechtigen zum Auszahlen von Guthaben mit Hilfe der Vorrichtung 2 möglich. Auch für diesen Zweck ist das Ticket oder eine andere Form der Identifizierung des Kontos, wie beispielsweise die Eingabe eines beim Anlegen des Kontos erhaltenen Passwortes oder die Chipkarte oder eine Kombination der erwähnten Möglichkeiten nötig, um den Zugriff auf das Konto zu ermöglichen. Bei der Vorrichtung 2 kann der Benutzer nach erfolgter Zugriffsberechtigung z.B. durch Einscannen des Strichcodes bestimmen, wie viel er von dem auf seinem Konto gespeicherten Guthaben ausbezahlt haben möchte. Auch dieser Vorgang wird in Form einer Buchung mit Hilfe des Guthabenverwaltungsservers 3 auf dem Konto des Benutzers vermerkt. Bei der Vorrichtung 2 wird sodann ein Auszahlbeleg gedruckt, mit dem der Kunde einen Mitarbeiter des POS aufsucht und von diesem gegen Vorlage des Auszahlbelegs Geld ausgezahlt bekommt - wobei eine Überprüfung der Gültigkeit des Auszahlungstickets vom POS Mitarbeiter optional über die Vorrichtung 2 durchgeführt werden kann.

Das Guthaben kann jedoch auch auf Wunsch des Benutzers direkt bei der Vorrichtung 2 oder mit Hilfe eines Webinterfaces an jedem Endgerät 11 bis 15, das mit der Vorrichtung 2 oder mit dem Guthabenverwaltungsserver 3 kooperiert, auf ein gewöhnliches Bankkonto oder Kreditkartenkonto überwiesen werden. Es kann weiters vorgesehen sein, dass das Geld direkt bei der Vorrichtung 2 durch ein geeignetes Modul zum Auszahlen von Geld ausbezahlt wird. Weiter kann auch eine Anbindung an einen gängigen Bargeld-Auszahlungsautomaten, wie beispielsweise an einen sogenannten Bankomat erfolgen, wo Teilbeträge oder das gesamte Guthaben in Geld konvertiert werden kann.

Zusammenfassend sei erwähnt, dass die Erfindung erhebliche Vorteile im Bereich des Übergangs zwischen Bargeld und virtuellem auf einem Konto gespeicherten Geld mit sich bringt. Durch das Vorsehen der erfindungsgemäßen Maßnahmen ist es erstmals möglich einen Kreislauf zu realisieren, bei dem Geld bankenunabhängig in ein Guthaben auf einem Konto konvertiert wird und dieses virtuelle Geld anschließend durch eine Integration von verschiedensten Applikationen abgerufen, benützt oder eingelöst und letztendlich gänzlich oder teilweise wieder auf das Konto rückgebucht werden kann und schließlich wieder in echtes Geld umgewandelt werden kann. Die Applikationen werden dabei wie üblich auf Computern oder Laptops oder ähnlichen stationären oder mobilen Geräten mit Software realisiert oder es werden zumindest ihre z.B. webbasierten Userinterfaces über diverse Endgeräte, wie beispielsweise die Endgeräte 11 bis 15 oder andere an diverse Netzwerke angekoppelte Endgeräte zugänglich gemacht. Unter summarischer Betrachtung der Erfindung ist dabei der Kreislauf selbst und der Selbstbedienungsaspekt, der durch das Vorsehen der Vorrichtung 2 gegeben ist, als vorteilhaftes Novum hervorzuheben.

Es sei an dieser Stelle erwähnt, dass die Verwendung der Einzahl nicht als einschränkend auszulegen ist. Obwohl die Erfindung mit Hilfe eines Ausführungsbeispiels und anhand von Beispielen ihrer Anwendung erörtert wurde, sei an dieser Stelle erwähnt, dass die Erfindung nicht auf dieses Ausführungsbeispiel und seine Optionen oder die hier erörterten Anwendungen eingeschränkt interpretiert werden soll.

Weiters sei an dieser Stelle erwähnt, dass die Kommunikation der verschiedenen Veränderungseinrichtungen 4 mit dem Guthabenverwaltungsserver 3 nicht über die Vorrichtung 2 erfolgen muss, sondern unabhängig von der Vorrichtung 2 auf direktem Weg über das Internet 16 oder das Mobilfunknetz 17 oder auch andere geeignete technische Übertragungswege erfolgen kann. Weiters sei erwähnt, dass, obwohl die Vorrichtung 2 in der Fig. 1 als eigenständiges Gerät dargestellt ist, sie jedoch auch als integraler Bestandteil eines anderen Gerätes existieren kann.

## Patentansprüche

1. Verfahren zum Erzeugen eines Guthabens, welches Guthaben Geld in digitaler Form repräsentiert, **dadurch gekennzeichnet, dass**
bei einer Vorrichtung (2) zum Erzeugen eines Guthabens ein Zahlungsmittel empfangen wird, mit dessen Hilfe das Guthaben erzeugt wird, und
das Guthaben von der Vorrichtung (2) an einen Guthabenverwaltungsserver (3) übertragen wird, bei dem das Guthaben mit Hilfe eines eindeutig identifizierbaren Kontos gespeichert wird.

2. Verfahren nach Anspruch 1, **dadurch gekennzeichnet, dass**
zusätzlich zu dem Empfangen des Zahlungsmittels Identifikationsdaten bei der Vorrichtung (2) empfangen werden, welche Identifikationsdaten zum Generieren einer Kontokennung zum eindeutigen Identifizieren des Kontos dienen, und
bei dem Übertragen auch die Identifikationsdaten an den Guthabenverwaltungsserver (3) mit übertragen werden.

3. Verfahren nach Anspruch 1, **dadurch gekennzeichnet, dass**
eine Beleginformation, welche ein erfolgreiches Speichern des Guthabens mit Hilfe des Kontos belegt, von dem Guthabenverwaltungsserver (3) gesendet und bei der Vorrichtung (2) empfangen wird und von der Vorrichtung (2) bereitgestellt wird.

4. Verfahren nach Anspruch 3, **dadurch gekennzeichnet, dass**
die Beleginformation zumindest eines der folgenden Elemente repräsentiert, mit dessen Hilfe das Guthaben auf dem Guthabenverwaltungsserver (3) verwaltet werden kann: die Kontokennung; einen Zugriffscode in Form von Benutzername und / oder Passwort; einen eindimensionalen Strichcode; einen zwei- oder mehrdimensionalen Strichcode.

5. Verfahren nach Anspruch 3, **dadurch gekennzeichnet, dass**
die Beleginformation bei der Vorrichtung (2) ausgedruckt oder angezeigt wird.

6. Vorrichtung (2) zum Erzeugen eines Guthabens, welches Guthaben Geld in digitaler Form repräsentiert, **dadurch gekennzeichnet, dass**
Empfangsmittel (5) vorgesehen sind, die zum Empfangen von Zahlungsmitteln und zum Erzeugen des Guthabens mit Hilfe der Zahlungsmittel ausgebildet sind, und Übertragungsmittel (8) vorgesehen sind, die zum Übertragen des Guthabens an einen Guthabenverwaltungsserver (3) ausgebildet sind, bei dem das Guthaben mit Hilfe eines eindeutig identifizierbaren Kontos speicherbar ist.

7. Vorrichtung (2) nach Anspruch 6, **dadurch gekennzeichnet, dass**
die Empfangsmittel (5) zusätzlich zum Empfangen von Identifikationsdaten ausgebildet sind, und
die Übertragungsmittel (8) zusätzlich zum Übertragen der Identifikationsdaten an den Guthabenverwaltungsserver (3) ausgebildet sind, bei dem die Identifikationsdaten zum Generieren einer Kontokennung zum eindeutigen Identifizieren des Kontos dienen.

8. Vorrichtung (2) nach Anspruch 6, **dadurch gekennzeichnet, dass**
die Übertragungsmittel (8) zum Empfangen einer Beleginformation, welche ein erfolgreiches Speichern des Guthabens mit Hilfe des Kontos belegt und von dem Guthabenverwaltungsserver (3) gesendet wird, ausgebildet sind, und
Bereitstellungsmittel (9) vorgesehen sind, die zum Bereitstellen der Beleginformation ausgebildet sind.

9. Vorrichtung (2) nach Anspruch 8, **dadurch gekennzeichnet, dass**
die Beleginformation zumindest eines der folgenden Elemente repräsentiert, mit dessen Hilfe das Guthaben auf dem Guthabenverwaltungsserver (3) verwaltet werden kann: die Kontokennung, einen Zugriffscode in Form von Benutzername und / oder Passwort; einen eindimensionalen Strichcode; einen zwei- oder mehrdimensionalen Strichcode.

10. Vorrichtung (2) nach Anspruch 8, **dadurch gekennzeichnet, dass**
die Bereitstellungsmittel (9) durch einen Drucker oder durch einen Bildschirm gebildet sind.

11. Vorrichtung (2) nach Anspruch 6, **dadurch gekennzeichnet, dass**
Mittel zum Bereitstellen einer indirekten Netzwerkverbindung von einem Netzwerk in ein anderes Netzwerk vorgesehen sind.

12. System (1) zum Verwalten eines Guthabens, welches Guthaben Geld in digitaler Form repräsentiert, **dadurch gekennzeichnet, dass**
das System (1) zumindest eine Vorrichtung (2) nach Anspruch 6 aufweist und einen Guthabenverwaltungsserver (3) zum Verwalten eines Guthabens aufweist, wobei der Guthabenverwaltungsserver (3) Kommunikationsmittel zum Kommunizieren mit der Vorrichtung (2) aufweist und
Verwaltungsmittel aufweist, die dazu ausgebildet sind, als Folge einer Kommunikation mit der Vorrichtung (2) ein eindeutig identifizierbares Konto zu erzeugen, mit dessen Hilfe das von der Vorrichtung (2) her empfangbare Guthaben speicherbar ist.

13. System (1) nach Anspruch 12, **dadurch gekennzeichnet, dass**
die Kommunikationsmittel des Guthabenverwaltungsservers (3) zum Kommunizieren mit mindestens einer Veränderungseinrichtung (4) ausgebildet sind, über welche Veränderungseinrichtung (4) Veränderungsanfragen betreffend ein eindeutig identifiziertes Konto an die Verwaltungsmittel kommunizierbar sind und
die Verwaltungsmittel gemäß den Veränderungsanfragen zum Verwalten des mit Hilfe des identifizierten Kontos gespeicherten Guthabens ausgebildet sind.
